# FASCICULE DE BREVET EUROPEEN

(11) **EP 3 237 860 B1**
(45) Date de publication et mention de la délivrance du brevet: **05.12.2018**
(21) Numéro de dépôt: 15816180.2
(22) Date de dépôt: 21.12.2015
(51) Int. Cl.: G02B 5/20, H04N 5/232, H04N 5/33, G01J 1/42, G02B 13/14

(54) **SYSTEME D'IMAGERIE GRAND CHAMP INFRAROUGE**
WEITFELD-INFRAROT-BILDGEBUNGSSYSTEM
WIDE-FIELD INFRARED IMAGING SYSTEM

(30) Priorité: 22.12.2014 FR 1463070
(43) Date de publication de la demande: 01.11.2017
(73) Titulaire: Office National d'Etudes et de Recherches Aérospatiales (ONERA), 91120 Palaiseau (FR)
(72) Inventeur: DRUART, Guillaume, 91120 Palaiseau (FR); GRULOIS, Tatiana, 91300 Massy (FR); GUERINEAU, Nicolas, 92160 Antony (FR); DESCHAMPS, Joël, 91460 Marcoussis (FR)
(74) Mandataire: Novagraaf Technologies
(86) Numéro de dépôt international: PCT/EP2015/080777
(87) Numéro de publication internationale: WO 2016/102453

(56) Documents cités:
- WO-A1-03/044476
- WO-A1-2012/035509
- WO-A1-2012/140389
- WO-A2-2010/040914
- US-A- 3 492 058

## Description

### Domaine technique

La présente invention se rapporte au domaine de l'imagerie grand champ.

Plus précisément, l'invention concerne un système d'imagerie grand champ pour le domaine spectral infrarouge comprenant une enceinte à vide ouverte optiquement pour le passage des rayons de champ provenant de la scène à imager, une chambre obscure refroidie placée à l'intérieur de l'enceinte à vide et munie d'un diaphragme froid, un détecteur infrarouge placé à l'intérieur de la chambre obscure refroidie et un dispositif de conjugaison optique des rayons de champ avec le détecteur.

### Etat de la technique

Un tel système est connu de l'homme du métier, notamment par l'exemple qu'en donne le brevet publié sous le numéro US4783593A, considéré comme étant l'état de la technique le plus proche.

Particulièrement, ce brevet décrit un système d'imagerie grand champ infrarouge comprenant une enceinte à vide ouverte optiquement par un hublot qui permet le passage des rayons de champ provenant de la scène à imager dans l'enceinte à vide. En outre, ce système comprend une chambre obscure refroidie placée à l'intérieur de l'enceinte à vide et munie d'un diaphragme froid, un détecteur infrarouge placé à l'intérieur de la chambre obscure refroidie et un dispositif de conjugaison optique des rayons de champ avec le détecteur.

Comme illustré dans la figure 3 du brevet US4783593A, le dispositif de conjugaison optique mentionné comporte une lentille chaude 16 (qui est l'objectif de ce dispositif) qui est placée à l'extérieur de l'enceinte à vide et porte l'essentiel de la puissance optique du système d'imagerie. Particulièrement, la lentille chaude 16 forme une image intermédiaire réelle des rayons de champ provenant de la scène à imager sur un plan à l'extérieur de l'enceinte à vide. Le dispositif de conjugaison optique comporte en outre un système télécentrique de reprise de cette image intermédiaire. Particulièrement, ce système télécentrique comprend une première lentille chaude 17 à l'extérieur de l'enceinte à vide qui collimate les rayons provenant du plan de l'image intermédiaire, et une deuxième lentille 18, dite lentille froide, à l'intérieur de la chambre obscure refroidie qui focalise sur le détecteur les rayons collimatés par la première lentille chaude 17. La lentille froide 18 est placée à une distance de la lentille chaude 16 supérieure à la longueur focale de la lentille chaude 16 et en outre, la distance entre le diaphragme froid et le détecteur infrarouge de la chambre obscure refroidie est sensiblement égale au double de la longueur focale de la lentille froide 18.

L'effet du dispositif de conjugaison optique mentionné ci-dessus est de former une image intermédiaire entre la lentille chaude 16 et la première lentille chaude 17 du système télécentrique, de sorte à permettre de changer l'angle de champ du système d'imagerie grand champ infrarouge en changeant simplement l'objectif (la lentille chaude 16). Particulièrement, il est connu qu'un objectif avec une courte distance focale fournie un grand angle de champ. Au contraire, un objectif avec une longue distance focale fournie un angle de champ faible. Ainsi, en remplaçant un objectif ayant une courte distance focale avec un objectif ayant une longue distance focale, l'angle de champ du système d'imagerie est changé d'un angle de champ grand à un angle de champ faible.

En outre, il est à noter que dans le système d'imagerie grand champ infrarouge du brevet mentionné, une éventuelle erreur de positionnement de la lentille froide 18 dans la chambre obscure refroidie, et donc une erreur de la longueur focale du système, est corrigée par un ajustement de la position de la lentille chaude 16 par rapport à la lentille froide 18, sans nécessiter d'intervention sur la lentille froide 18 à l'intérieur de l'enceinte à vide, cette enceinte à vide étant généralement scellée.

Cependant, ce système de l'art antérieur présente plusieurs inconvénients, notamment une longueur importante liée au nombre de lentilles et à la longueur de la chambre obscure refroidie, une durée élevée de mise en froid liée à la longueur importante de la chambre obscure refroidie, et une sensibilité importante aux variations de température de la lentille chaude 16.

Le problème que se propose de résoudre la présente invention est la conception d'un système d'imagerie compact grand champ infrarouge qui permet de corriger efficacement une erreur de positionnement de la lentille froide dans la chambre obscure refroidie, sans intervenir sur la lentille froide, et qui résout les inconvénients de l'art antérieur mentionnés ci-dessus.

Le document WO 03/044476 A1 divulgue un appareil d'imagerie infrarouge comprenant une lentille asphérique. Le document WO 2012/140389 A1 divulgue un système d'imagerie comprenant une lentille de Fresnel. Le document US 3,492,058 divulgue un assemblage de lentilles pour un détecteur infrarouge. Le document WO 2012/035509 A1 divulgue un système optique d'imagerie à FTM améliorée. Le document WO 2010/040914 A2 divulgue une système d'imagerie grand champ infrarouge dans une enceinte à vide. Aucun de ces documents ne résout le problème technique précédemment cité.

### Définitions

Dans ce qui suit, on entend par « lentille » un composant optique transparent destiné à faire converger ou diverger la lumière. Une lentille possède donc une puissance optique non nulle et au moins un de ses dioptres optiques présente un rayon de courbure non nul.

Les rayons de courbure d'une lentille ont une valeur algébrique. Dans ce qui suit, la convention de signe suivante sera utilisée : la valeur du rayon de courbure du dioptre est positive si le centre de courbure du dioptre est situé à droite du sommet du dioptre et la valeur du rayon de courbure du dioptre est négative si le centre de courbure du dioptre est situé à gauche du sommet du dioptre.

Une lame à faces parallèles, qui ne possède pas de puissance optique et qui présente deux faces planes, n'est pas une lentille.

Un hublot est un composant qui a une fonction d'ouverture optique et d'étanchéité. Un hublot peut être une lentille, une lame à faces parallèles, etc.

### Description de l'invention

Pour résoudre un ou plusieurs des inconvénients cités précédemment, le système d'imagerie grand champ selon l'invention comprend une enceinte à vide ouverte optiquement par un hublot pour le passage des rayons de champ provenant de la scène à imager, une chambre obscure refroidie placée à l'intérieur de l'enceinte à vide et munie d'un diaphragme froid, un détecteur infrarouge placé à l'intérieur de la chambre obscure refroidie et un dispositif de conjugaison optique des rayons de champ avec le détecteur, le dispositif de conjugaison optique comprenant au moins une lentille froide convergente placée à l'intérieur de la chambre obscure refroidie pour focaliser les rayons de champ sur le détecteur infrarouge et au moins une lentille chaude convergente ou divergente placée à l'extérieur de la chambre obscure refroidie.

Avec cet objectif en vue, le système d'imagerie grand champ selon l'invention, par ailleurs conforme au préambule cité ci-avant, est essentiellement caractérisé en ce que la lentille froide convergente porte l'essentiel de la puissance optique, le diaphragme froid est le diaphragme du dispositif de conjugaison optique, la lentille chaude forme une image intermédiaire virtuelle située soit en amont de la lentille chaude, soit en aval de la lentille froide. Dans les deux configurations, la forme de la lentille chaude est telle que la valeur absolue de la différence entre les rayons de courbure Rg et Rd des deux dioptres de la lentille chaude est inférieure ou égale à e(1-1/n), où e et n sont respectivement l'épaisseur et l'indice optique de la lentille chaude.

Des caractéristiques ou des modes de réalisation particuliers, utilisables seuls ou en combinaison, sont :
- la lentille chaude est convergente et est placée à une distance de la lentille froide inférieure à la longueur focale de ladite lentille chaude de sorte que l'image intermédiaire virtuelle est située en aval de la lentille froide (c'est-à-dire après la lentille froide dans le sens de propagation des rayons de champs), la combinaison de la lentille chaude et de la lentille froide formant une architecture optique du type Petzval ;
- la lentille chaude est divergente et l'image intermédiaire virtuelle est située en amont de la lentille chaude (c'est-à-dire avant la lentille chaude dans le sens de propagation des rayons de champs), la combinaison de la lentille chaude et de la lentille froide formant une architecture optique du type rétrofocus ;
- la lentille froide a un diamètre inférieur à la taille du détecteur ;
- la lentille chaude est un ménisque (un ménisque étant une lentille dont les deux dioptres sont sphériques et les centres des sphères sont situés du même côté du plan de la lentille) ;
- la lentille froide est un ménisque ;
- la lentille froide a une forme en plan convexe ;
- la lentille froide plan convexe a une épaisseur inférieur au dixième de son diamètre ;
- la lentille froide est une lentille de Fresnel ;
- la lentille de Fresnel a un ordre de diffraction supérieure à 5 ;
- un filtre spectral est placé dans l'enceinte à vide ;
- le filtre spectral est placé dans la chambre obscure refroidie en amont ou en aval de la lentille froide ;
- le filtre spectral est placé sur la lentille froide ;
- une lame est placée au niveau du diaphragme froid, l'ouverture de la lame dépendant de la bande spectrale utilisée dans le système d'imagerie grand champ ;
- le détecteur est un détecteur bispectral qui est sensible à deux bandes spectrales différentes ;
- le hublot a aussi une fonction de lentille chaude.

En résumé, un aspect fondamental de l'invention est que son architecture optique est compatible avec un environnement cryogénique (existence d'une chambre refroidie dans une enceinte à vide), contrairement aux architectures de l'état de l'art ayant aussi l'essentiel de la puissance optique du système optique portée par leur lentille froide.

Grâce à l'invention, la masse optique à refroidir est très réduite de manière à obtenir des temps de mise en froid courts. Cette masse optique réduite peut être obtenue par au moins une de trois approches suivantes :
- on intègre le minimum de lentilles froides (dans l'exemple des figures ci-dessous, on n'utilise qu'une seule lentille froide)
- on réduit le diamètre de la lentille froide qu'elle que soit sa forme (ceci est donc valable aussi dans le cas d'une lentille froide qui est une lentille de Fresnel), ce qui réduit la masse à refroidir et donc la durée de mise en froid
- une lentille froide qui peut être très amincie, notamment si elle est plan convexe, et dans un mode de réalisation particulière, un filtre spectral peut être déposé sur le dioptre plan de la lentille plan convexe réduisant encore ainsi la masse à refroidir.

Un autre avantage de l'invention est que l'ajustement des rayons de courbure de la lentille chaude, permet de corriger une erreur de positionnement de la lentille froide, qui une fois intégrée dans une enceinte à vide scellée, ne peut plus être déplacée.

Par ailleurs, l'essentiel de la puissance optique étant portée par la lentille froide, le système d'imagerie est athermal (c'est-à-dire qu'il est robuste aux variations de température).

### Brève description des figures

L'invention sera mieux comprise à la lecture de la description qui suit, faite uniquement à titre d'exemple, et en référence aux figures en annexe dans lesquelles :
- La figure 1 représente un schéma d'un système d'imagerie grand champ infrarouge selon un premier mode de réalisation de l'invention ;
- La figure 2 représente un schéma d'un système d'imagerie grand champ infrarouge selon un deuxième mode de réalisation de l'invention où il est ajouté un filtre spectral ;
- La figure 3a représente un schéma d'un système optique issue d'un logiciel classique ZEMAX, ce système optique ayant la même architecture optique que le système d'imagerie grand champ de la figure 2, sauf que la lentille froide convergente de ce système optique est une lentille plan convexe au lieu d'un ménisque ;
- La figure 3b représente un diagramme avec les performances optiques du système optique de la figure 3a dans le cas d'une erreur de positionnement de la lentille froide.
- La figure 4a représente un diagramme avec les performances optiques du système optique de la figure 3a dans le cas d'une erreur de positionnement de la lentille froide de +300 micromètres par rapport au détecteur.
- La figure 4b représente un diagramme avec les performances optiques améliorées du système optique de la figure 3a après remplacement de la lentille chaude par une autre lentille chaude d'épaisseur adaptée pour corriger ladite erreur de positionnement de la lentille froide de +300 micromètres par rapport au détecteur.
- La figure 5a représente un diagramme avec les performances optiques du système optique de la figure 3a dans le cas d'une erreur de positionnement de la lentille froide de -300 micromètres par rapport au détecteur.
- La figure 5b représente un diagramme avec les performances optiques améliorées du système optique de la figure 3a après remplacement de la lentille chaude par une autre lentille chaude d'épaisseur adaptée pour corriger ladite erreur de positionnement de la lentille froide de -300 micromètres par rapport au détecteur.

### Modes de réalisation

Les exemples de réalisation ci-après s'appliquent pour tout système d'imagerie grand champ dans des bandes spectrales infrarouge, notamment dans les bandes spectrales II (longueur d'onde entre 3 et 5 micromètres) et III (longueur d'onde entre 8 et 12 micromètres).

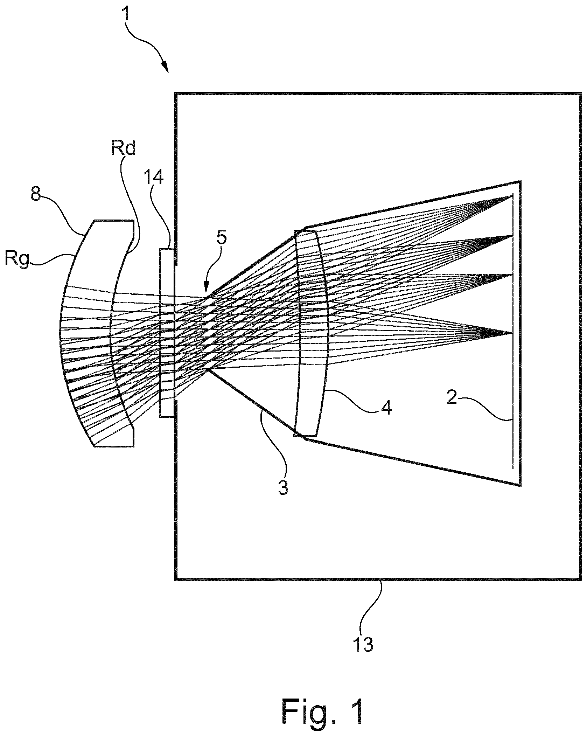

La figure 1 représente un système d'imagerie grand champ 1 pour le domaine spectral infrarouge comprenant une enceinte à vide 13 ouverte optiquement pour le passage des rayons de champ provenant d'une scène à imager située à l'infini (c'est-à-dire située à une distance supérieure à dix fois la longueur focale, ou à une distance telle que les fronts d'onde des rayons de champ sont pratiquement plans). Les rayons de champ sont par définition les rayons lumineux provenant de la scène située à l'infini.

Dans le mode de réalisation de la figure 1, l'enceinte à vide 13 comporte un hublot 14 qui permet d'ouvrir optiquement l'enceinte à vide 13 tout en assurant son étanchéité. Dans ce cas là, les rayons de champ passent par le hublot 14 à l'intérieur de l'enceinte à vide 13.

En outre, le système d'imagerie grand champ 1 comprend une chambre obscure refroidie 3 placée à l'intérieur de l'enceinte à vide 13 et munie d'un diaphragme froid 5. Il est à noter que la chambre obscure refroidie 3 est aussi connue dans l'état de la technique comme « écran froid ».

Le système d'imagerie grand champ 1 comprend en outre un détecteur infrarouge 2 placé à l'intérieur de l'enceinte à vide 13.

Dans un exemple, le détecteur infrarouge 2 est un détecteur bispectral qui est sensible à deux bandes spectrales différentes. Dans un autre exemple, le détecteur bispectral est sensible à la bande spectrale II et à la bande spectrale III.

En outre, le système d'imagerie grand champ 1 comprend un dispositif de conjugaison optique des rayons de champ avec le détecteur infrarouge 2. Ce dispositif de conjugaison optique comprend au moins une lentille froide convergente 4 placée à l'intérieur de ladite chambre obscure refroidie 3 pour focaliser les rayons de champ sur le détecteur infrarouge 2 et au moins une lentille chaude convergente 8 placée à l'extérieur de la chambre obscure refroidie 3, et plus particulièrement à l'extérieur de l'enceinte à vide 13. Dans un autre exemple, la lentille chaude 8 est divergente.

Avantageusement, dans le mode de réalisation de la figure 1, seulement une lentille chaude convergente 8 est placée à l'extérieur de l'enceinte à vide 13 et une seule lentille froide convergente 4 est placée dans la chambre obscure refroidie 3, ainsi permettant d'une part de réduire la longueur du système d'imagerie grand champ 1 et d'autre part de réduire la masse optique à refroidir.

En outre, dans un autre mode de réalisation (non illustré dans les figures) le hublot 14 joue aussi le rôle de la lentille chaude 8. Dans ce cas là, il n'y a pas besoin de mettre une lentille chaude 8 en amont de le hublot 14 (c'est-à-dire avant le hublot 14 dans le sens de propagation des rayons de champs), ce qui permet de réduire la longueur du système d'imagerie grand champ.

Dans le mode de réalisation de la figure 1, la lentille chaude convergente 8 et la lentille froide convergente 4 sont des ménisques. Dans un autre exemple non illustré dans les figures, la lentille froide convergente 4 a une forme plan convexe. Il est à noter que la forme de chaque lentille (chaude ou froide) est généralement optimisée pour réduire les aberrations optiques. Dans le domaine spectral de l'infrarouge, du fait des indices élevés, les formes optimisées des lentilles ont tendance à être des ménisques. Dans le cas particulier de la lentille froide convergente 4 de forme plan convexe, une telle forme permet de faciliter la fabrication d'une lentille d'épaisseur réduite, cette épaisseur pouvant alors avoir une valeur inférieure à la celle donnée par la règle d'ingénieur d'un dixième de son diamètre. Cette épaisseur réduite permet de limiter au maximum la masse de l'optique froide à refroidir.

Par ailleurs, il est à noter que le système d'imagerie grand champ 1 de la figure 1 est un système d'architecture optique de type Petzval, caractérisé par la succession d'une première et d'une seconde lentille convergente suffisamment espacées l'une de l'autre pour ne pas être considérées comme constitutive d'un groupe optique. En particulier, dans ce système d'imagerie grand champ 1, la lentille chaude convergente 8 est placée à une distance de la lentille froide convergente 4 inférieure à la longueur focale de la lentille chaude convergente 8 et la distance entre le diaphragme froid 5 et le détecteur infrarouge 2 est sensiblement égale à la longueur focale de la lentille froide convergente 4. Ainsi, la lentille chaude convergente 8 forme une image intermédiaire virtuelle située en aval de la lentille froide convergente 4. En outre, dans ce système d'imagerie grand champ 1, le diaphragme froid 5 est le diaphragme du dispositif de conjugaison optique.

Il est à noter que le système d'imagerie grand champ 1 de la figure 1 a une longueur réduite en comparaison avec la longueur du brevet US4783593A où la lentille chaude convergente est placée à une distance de la lentille froide supérieure à la longueur focale de la lentille chaude et où la distance entre le diaphragme froid et le détecteur infrarouge est le double que la longueur focale de la lentille froide. En outre, le fait que dans le cas de la configuration de type Petzval de la figure 1 la distance entre le diaphragme froid 5 et le détecteur infrarouge 2 du système d'imagerie grand champ 1 est sensiblement égale à la longueur focale de la lentille froide convergente 4, permet d'avoir une chambre obscure refroidie 3 d'une longueur inférieure à celle de US4783593A, et ainsi d'avoir une durée moins élevée de mise en froid.

Les distances entre les différents éléments de l'architecture optique sont définies au cours d'une étape d'optimisation à l'aide d'un logiciel de conception optique et il n'y a pas d'équations simples qui donneraient la position exacte de ces différents éléments. Un homme du métier sait déterminer ces distances, notamment si on lui précise qu'il s'agit d'une architecture optique de type Petzval.

Dans un autre exemple non illustré dans les figures, le système d'imagerie grand champ est un système d'architecture optique de type rétrofocus caractérisé par la succession d'une première lentille, divergente, et puis d'une seconde lentille, convergente, cette seconde lentille convergente étant froide, et cette première lentille divergente étant chaude et formant une image intermédiaire située en amont de cette première lentille divergente.

Il est à noter que compte tenu des contraintes pour ouvrir et refermer à une enceinte à vide, nous découplons le diaphragme de la première lentille pour le placer entre la première et la seconde lentille de l'architecture optique considérée. Cela permet de placer la première lentille à l'extérieur de l'enceinte à vide tout en obtenant suffisamment de place entre la première lentille et le diaphragme afin d'insérer un hublot qui va sceller l'enceinte à vide.

Dans le cas particulier où un système d'imagerie grand champ est de type Petzval (voir le système de la figure 1), il s'agit en fait d'un cas particulier d'architecture où la seconde lentille (lentille froide) a une puissance optique supérieure à celle de la première lentille (lentille chaude). La concentration de la puissance optique sur la lentille froide permet d'avoir une propriété d'athermalisation du système optique malgré la présence de la lentille chaude à l'extérieur de l'enceinte à vide.

Il est à noter que dans le système d'imagerie grand champ 1 de la figure 1, la lentille froide convergente 4 porte l'essentiel de la puissance optique du système d'imagerie, c'est-à-dire que la longueur focale de la lentille froide convergente 4 est bien plus faible que la longueur focale de la lentille chaude convergente 8. Ainsi, le système d'imagerie grand champ 1 ne présente pas une sensibilité aux variations de température. En effet, la longueur focale f du système est définie à partir de la longueur focale f1 de la première lentille d'épaisseur e et de la longueur focale f2 de la seconde lentille, par la relation 1/f = 1/f1 + 1/f2 - e/f1f2, donc à l'ordre 1, comme f2 >> f1 alors, f = f1 et comme f1 est athermalisée, alors f ne varie pas non plus aux variations de température. Au contraire, dans le système d'imagerie de US4783593A, l'essentiel de la puissance optique est portée par la lentille chaude et ainsi ce système présente une sensibilité aux variations de température.

Il est à noter que la forme de la lentille chaude 8 convergente du système d'imagerie grand champ 1 est telle que la valeur absolue de la différence entre les rayons de courbure Rg et Rd des deux dioptres de la lentille chaude convergente 8 est inférieure ou égale à e(1-1/n), où e et n sont respectivement l'épaisseur et l'indice optique de la lentille chaude convergente 8. Il est à noter que dans l'exemple où la lentille chaude 8 est divergente, la forme de la lentille chaude divergente 8 respecte aussi la condition mentionnée ci-dessus pour la forme de la lentille chaude convergente 8.

Par ailleurs, comme illustré dans la figure 1, Rg correspond au rayon de courbure du dioptre gauche de la lentille chaude convergente 8 puisque Rd correspond au rayon de courbure du dioptre droit de la lentille chaude convergente 8. Le dioptre gauche de la lentille chaude convergente 8 est en amont du dioptre droit de la lentille chaude convergente 8, c'est-à-dire avant le dioptre droit de la lentille chaude convergente 8 dans le sens de propagation des rayons de champs. Il est à noter qu'un dioptre est une surface qui sépare deux milieux d'indices optiques différents, typiquement un premier milieu constitué du matériau de la lentille considérée et un second milieu constitué d'air.

Il a été constaté que dans le cas où la forme de la lentille chaude convergente 8 est telle que la valeur absolue de la différence entre les rayons de courbure des deux dioptres de la lentille chaude convergente 8 est inférieure ou égale à e(1-1/n), la longueur focale de la lentille chaude convergente 8 devient très sensible à une variation d'épaisseur de cette lentille. Dans ce cas là, la longueur focale de la lentille chaude convergente 8 peut être ajustée par un ajustement de l'épaisseur de cette lentille.

Il est connu qu'une erreur de positionnement de la lentille froide dans la chambre obscure refroidie, et donc une erreur de mise au point, peut être corrigée soit par l'ajustement du positionnement de la lentille chaude convergente 8, comme il est fait dans US4783593A, soit par l'ajustement de la longueur focale de la lentille chaude convergente 8.

Il est à noter que dans le système d'imagerie grand champ 1, il n'est pas possible de corriger complètement une erreur de positionnement de la lentille froide convergente 4 par un ajustement du positionnement de la lentille chaude convergente 8, comme dans US4783593A. La raison est que dans le système d'imagerie grand champ 1, l'essentiel de la puissance optique de ce système est portée par la lentille froide convergente 4 et non plus par la lentille chaude 8, comme dans US4783593A. Ainsi, un ajustement du positionnement de la lentille chaude convergente 8 ne serait pas suffisant pour corriger complètement une erreur de positionnement de la lentille froide convergente 4, comme c'est le cas dans US4783593A.

Cependant, dans le système d'imagerie grand champ 1, la correction d'une erreur de positionnement de la lentille froide convergente 4 dans la chambre obscure refroidie 3 est effectuée par l'ajustement de l'épaisseur de la lentille chaude convergente 8, sur la condition que la différence entre les rayons de courbure des deux dioptres de la lentille chaude convergente 8 doit être inférieure ou égale à e(1-1/n).

Avantageusement, cette différence entre les rayons de courbure des deux dioptres de la lentille chaude est non nulle. En effet, plus cette différence tend vers 0, plus la longueur focale de la lentille est sensible à une variation d'épaisseur de cette lentille jusqu'à un point où la lentille devient difficilement réalisable. Il est donc nécessaire de trouver un compromis entre la sensibilité de la longueur focale en fonction de l'épaisseur et la faisabilité de la lentille.

Il est à noter que l'homme du métier peut ajuster l'épaisseur de la lentille chaude convergente 8 selon le cas particulier d'erreur de positionnement de la lentille froide convergente 4 qu'il souhaite corriger, en remplaçant la lentille chaude convergente 8 par une autre lentille chaude convergente ayant une épaisseur ajustée pour corriger cette erreur et aussi ayant une forme qui respecte la condition mentionnée ci-dessus. Dans l'exemple où la lentille chaude 8 est divergente, l'homme du métier peut ajuster l'épaisseur de la lentille chaude divergente 8 selon le cas particulier d'erreur de positionnement de la lentille froide convergente 4 qu'il souhaite corriger, en remplaçant la lentille chaude divergente 8 par une autre lentille chaude divergente ayant une épaisseur ajustée pour corriger cette erreur et aussi ayant une forme qui respecte la condition mentionnée ci-dessus.

En outre il est à noter que dans le brevet US4783593A, le système présente un plan image intermédiaire entre l'optique chaude et l'optique froide. Le champ de vue étant défini, dans la configuration de ce brevet, par l'optique chaude, il suffit de changer la longueur focale de l'optique chaude pour changer le champ de vue. Dans la présente invention, l'optique chaude et l'optique froide forment un tout, à savoir un objectif de Petzval ou un objectif de type rétrofocus et on ne peut retirer l'une ou l'autre des optiques de l'architecture sans impacter la qualité image du système.

L'angle de champ du système d'imagerie grand champ 1 peut être fixé dans une gamme entre 10° et 90° pour une architecture de type Petzval. Dans le cas où l'angle de champ souhaité est plus élevé (typiquement entre 90° et 180°) que celui d'un système Petzval, la lentille chaude est divergent et la lentille froide est convergente, la combinaison lentille chaude et lentille froide constituant une architecture optique de la famille des rétrofocus.

Typiquement, pour un angle de champ entre 10° et 90°, le système est plutôt un Petzval, avec tous les effets bien connus liés à ce type d'architecture optique. Une telle architecture permet d'avoir un tirage (distance entre la dernière lentille froide et le détecteur) sensiblement égal à la moitié de la longueur focale du système.

Typiquement, pour un angle de champ entre 90°et 180°, le système est plutôt un rétrofocus avec tous les effets bien connus liés à ce type d'architecture optique. Une telle architecture permet d'avoir un tirage supérieur à la longueur focale du système.

Il est à noter cependant que les familles d'architecture optique peuvent se chevaucher en ce qui concerne l'angle de champ de vue.

A partir de ce qui précède, il est clair que le système d'imagerie grand champ 1 permet, en compensation d'angle de champ non modifiable, de corriger efficacement une erreur de positionnement de la lentille froide dans la chambre obscure refroidie, et de réduire la longueur, la durée de mise en froid et la sensibilité aux variations de température des systèmes optiques d'imagerie par rapport à l'état de la technique.

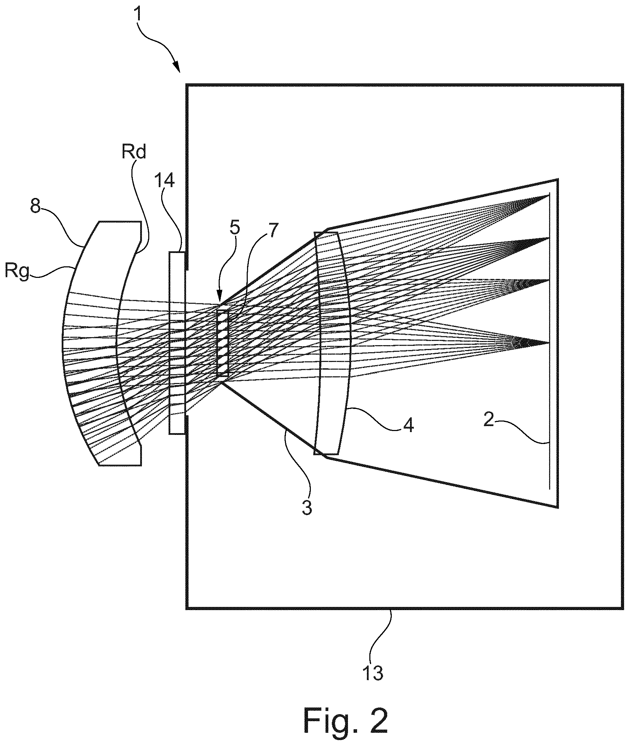

La figure 2 illustre un autre mode de réalisation du système d'imagerie grand champ 1 qui est identique au mode de réalisation de la figure 1, sauf en ce qu'il comprend aussi un filtre spectral 7. Le filtre spectral 7 peut être utilisé pour limiter les bandes spectrales infrarouges à détecter par le détecteur infrarouge 2 du système optique. Dans un exemple, le filtre spectral 7 est adapté pour permettre le passage des rayons de champ d'une longueur d'onde qui correspond aux bandes spectrales II et III.

Comme illustré dans la figure 2, le filtre spectral 7 est placé au niveau du diaphragme froid 5. Cependant, dans un autre exemple non illustré dans les figures, le filtre spectral 7 est placé dans la chambre obscure refroidie 3 en aval de la lentille froide convergente 4, c'est-à-dire après la lentille froide convergente 4 dans le sens de propagation des rayons de champs. Dans un autre exemple non illustré dans les figures, le filtre spectral 7 peut être placé dans la chambre obscure refroidie 3 en amont de la lentille froide convergente 4, c'est-à-dire avant la lentille froide convergente 4 dans le sens de propagation des rayons de champs.

Dans les cas mentionnés ci-dessus, le filtre spectral 7 est placé le long de l'axe optique de la lentille froide convergente 4 à l'intérieur de la chambre obscure refroidie 3.

Cependant, dans un autre exemple non illustré dans les figures, le filtre spectral 7 est placé le long de l'axe optique de la lentille froide convergente 4 à l'extérieur de la chambre obscure refroidie 3 mais toujours à l'intérieur de l'enceinte à vide 13. Ce mode de fonctionnement est cependant un mode de fonctionnement dégradé.

En outre, dans un autre exemple, le filtre spectral 7 peut être placé sur l'un ou les deux dioptres de la lentille froide convergente 4 de la figure 2 qui est un ménisque (un ménisque étant une lentille dont les deux dioptres sont sphériques, l'un des dioptres concave et l'autre convexe, les centres des sphères étant situés du même côté du plan de la lentille).

Dans un autre exemple, le système d'imagerie grand champ 1 est identique au mode de réalisation de la figure 2, sauf en ce que la lentille froide convergente 4 a une forme de plan convexe.

La forme en plan convexe de la lentille froide convergente permet d'envisager une très faible épaisseur de cette lentille ce qui permet de réduire considérablement la masse de l'optique à refroidir.

Cette forme facilite également le dépôt du filtre spectral 7 qui est en général une structure multicouche. Le fait que le filtre spectral 7 soit placé sur le dioptre plan de la lentille froide convergente 4 permet de limiter au maximum la masse optique à refroidir en évitant le recours à une lame dédiée au filtrage spectral.

Dans un autre exemple, le filtre spectral 7 est placé sur le dioptre convexe de la lentille froide convergente 4 qui a une forme plan convexe.

Dans un autre exemple, un filtre spectral 7 peut être placé sur chacun de deux dioptres de la lentille froide convergente 4. Un exemple de cas où cela pourrait être avantageux serait un cas où la fonction de filtrage est complexe où, il peut être nécessaire d'appliquer des multicouches différentes de part et d'autre de la lentille froide convergente 4. Dans ce cas, on peut donc être amené à placer des multicouches sur le dioptre convexe et le dioptre plan de la lentille froide convergente 4 qui est une lentille de forme plan convexe.

Dans un autre exemple non illustré dans les figures, le système d'imagerie grand champ est identique au système d'imagerie grand champ 1 de la figure 2, sauf en ce que la lentille froide convergente 4, qui a une forme plan convexe, est une lentille de Fresnel.

Il est bien connu que par rapport à une lentille plan convexe classique, la lentille de Fresnel réduit la flèche optique de la lentille en la découpant en un ensemble d'anneaux concentriques de section prismatique connus sous le nom de zones de Fresnel. Pour chacune de ces zones, l'épaisseur est réduite, ce qui fait que la surface globale de la lentille n'est plus homogène mais se compose de plusieurs surfaces de même courbure, séparées par des discontinuités (par exemple d'épaisseur ou d'indice).

Ainsi, l'avantage d'avoir une lentille froide convergente 4 de forme plan convexe qui est une lentille de Fresnel, au lieu d'avoir une lentille froide convergente 4 de forme plan convexe classique, est de pouvoir amincir davantage la lentille. Ainsi, la masse de la lentille froide convergente 4 est réduite.

Dans un exemple, la lentille de Fresnel a un ordre de diffraction élevé qui est supérieure à 5. Cet ordre de diffraction élevé permet de réduire le chromatisme axial par rapport à celui qui serait généré par une lentille de Fresnel classique d'ordre de diffraction égale à 1.

L'utilisation d'une lentille chaude à l'extérieur de l'enceinte à vide permet avantageusement de réduire le diamètre de la lentille de Fresnel froide en permettant aux rayons en bord de champ d'arriver selon une incidence moyenne inclinée par rapport à la perpendiculaire du détecteur. Un diamètre réduit de lentille de Fresnel permet aux rayons en bord de champ d'éclairer moins de discontinuités et la qualité image s'en trouve améliorée. Il est à noter qu'afin de limiter les effets d'ombrages occasionnés par les discontinuités, le côté fresnélisé de la lentille froide est de préférence orienté face au détecteur.

Dans un autre mode de réalisation non illustré dans les figures, une lame est placée au niveau du diaphragme froid 5, dont l'ouverture dépend de la bande spectrale utilisée dans le système d'imagerie grand champ 1. Il est connu qu'une lame par définition est une lentille à faces parallèles. Le fait d'avoir une lame au niveau du diaphragme froid 5 permet de trouver un compromis entre la nécessité d'avoir une grande ouverture pour la bande III et la possibilité de travailler avec une ouverture moindre pour la bande II qui permet de limiter l'amplitude des aberrations à corriger ainsi que de réduire la sensibilité du système aux erreurs de fabrication et de positionnement des éléments optiques dans la bande spectrale II. Précisons que la nécessité mentionnée ci-dessus vient du fait que la tache image dépend de la longueur d'onde et de l'ouverture, et donc que pour avoir une tache image adaptée, en un même surface élémentaire centrée sur un pixel, à la fois en bande II et en bande III, il faut que le système en bande III soit plus ouvert qu'en bande II. Néanmoins si on utilise l'ouverture de la bande III pour la bande II, le système produira trop d'aberrations optiques en bande II et la qualité image sera dégradée en bande II, d'où l'intérêt d'avoir une lame qui modifie l'ouverture en fonction de la bande spectrale.

Il est à noter que l'indice de réfraction de la lentille froide convergente 4 est préférentiellement supérieur à 3. Les matériaux utilisés pour réaliser une telle lentille peuvent être par exemple du germanium, dont l'indice est égal à 4 ou du silicium, dont l'indice est égal à 3,5. Plus généralement, la lentille est préférentiellement réalisée dans tout type de matériau à fort indice. Cela contribue en effet à améliorer les performances du système, puisqu'ils limitent les aberrations géométriques grâce au fort indice et les aberrations de chromaticité du fait de leur faible dispersion chromatique. Un fort indice de réfraction permet également de réduire le rayon de courbure de la lentille froide convergente 4 et donc de réaliser une lentille plus mince.

En outre, il est à noter que préférentiellement la lentille chaude convergente 8 est composée des verres de chalcogénure (par exemple des verres du GASIR™). L'indice réfractif d'une lentille en Gasir est moins sensible aux variations de température que l'indice réfractif d'une lentille en Germanium. Ainsi, une lentille chaude convergente en Gasir est moins sensible aux variations de température qu'une lentille chaude convergente en Germanium. On choisira donc préférentiellement des matériaux dont l'indice varie peu aux variations de température et qui se contractent peu aux variations de température.

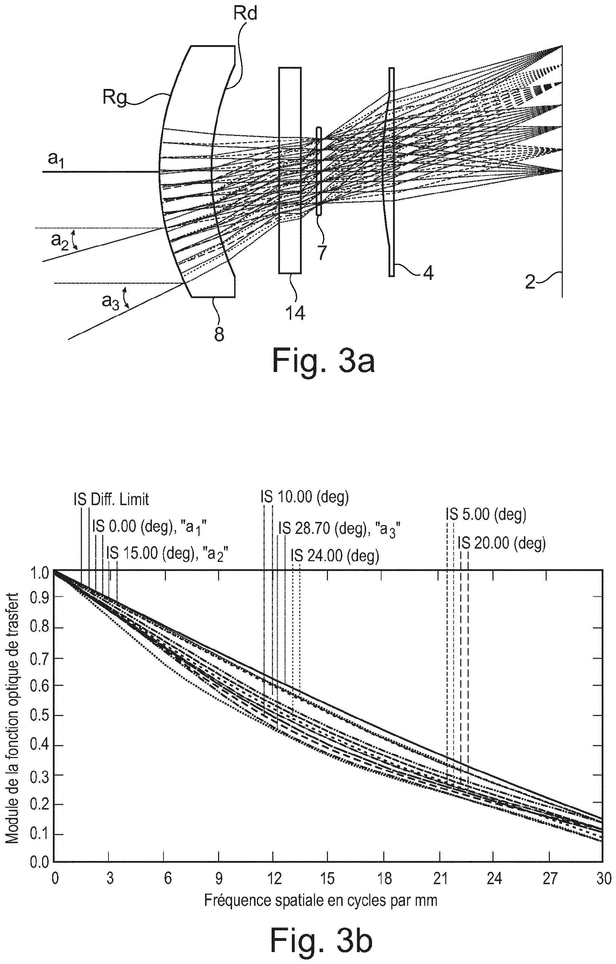

La figure 3a illustre un schéma d'un système optique issue d'un logiciel ZEMAX bien connu de l'homme du métier, ce système optique ayant la même architecture optique que le système d'imagerie grand champ de la figure 2, sauf que la lentille froide convergente 4 de ce système optique est une lentille plan convexe au lieu d'un ménisque. En particulier, comme illustré dans la figure 3a, le système optique comporte une lentille chaude convergente 8, un hublot 14, un filtre spectral 7, une lentille froide convergente 4 qui est une lentille plan convexe. Le filtre spectral 7 est placé au niveau du diaphragme froid comme c'est le cas pour le filtre spectral 7 de la figure 2. Il est à noter que la chambre obscure refroidie et l'enceinte à vide de la figure 2 ne sont pas représentées dans le schéma de la figure 3a. En outre, le schéma de la figure 3a illustre des rayons de champ provenant de la scène à imager et formant différentes angles de champ a1, a2 et a3.

Les principales grandeurs structurelles du système optique de la figure 3a sont listées ci-dessous :
Champ de vue : 57.4°
Encombrement : 31.4 mm
Longueur focale du système : 31.4 mm
Longueur focale de la lentille chaude : 60.5 mm
Rayon de courbure Rg du dioptre coté scène de la lentille chaude initiale: 19.251 mm
Rayon de courbure Rd du dioptre coté détecteur de la lentille chaude: 21.251 mm
Epaisseur e de la lentille chaude : 4.17 mm
Pour la lentille chaude, on respecte bien la condition (Rg-Rd (=2 mm) < (1-1/n)e ≈ 2.5 mm (avec n=2.5)
Longueur focale de la lentille froide : 20.1mm (on constate qu'on est proche de la longueur focale du système optique)
Rayon de courbure Rg du dioptre coté scène de la lentille froide plan convexe : 58.87 mm Diamètre de la lentille froide : 16 mm
Epaisseur de la lentille froide : 0.7mm (inférieure à son diamètre/10 qui vaut 1.6 mm)
La lentille froide est robuste à des erreurs sur l'épaisseur.
Distance lentille chaude/lentille froide : 14 mm
Distance diaphragme froid/détecteur : 18.6 mm

La figure 3b représente un diagramme avec les performances optiques du système optique de la figure 3a dans le cas où il n'y a pas une erreur de positionnement de la lentille froide convergente 4.

En particulier, le diagramme de la figure 3b illustre la Fonction de Transfert de Modulation (FTM) polychromatique issue du logiciel ZEMAX. L'axe horizontal du diagramme correspond aux fréquences spatiales en cycles par mm et l'axe vertical du diagramme correspond au module de la fonction optique de transfert. Les différentes courbes illustrées dans le diagramme correspondent aux différents angles de champ de rayons de la figure 3a et la ligne droite illustrée dans le diagramme correspond à la limite de diffraction (voir « Diff. Limit » dans la figure 3b). Plus les courbes se rapprochent de la ligne droite (limite de diffraction) meilleure est la qualité d'image (résolution spatiale) du système d'imagerie. En outre, les barres verticales du diagramme de la figure 3b permettent d'associer chaque courbe à un angle de champ (voir par exemple les angles de champ a1, a2 et a3 de la figure 3a qui correspondent respectivement aux angles de 0 degrés, 15 degrés et 28,70 degrés illustrés dans la figure 3b). En particulier, comme illustré dans la figure 3b, les barres verticales correspondent soit à la FTM sagittale (S) soit à la FTM tangentielle (T).

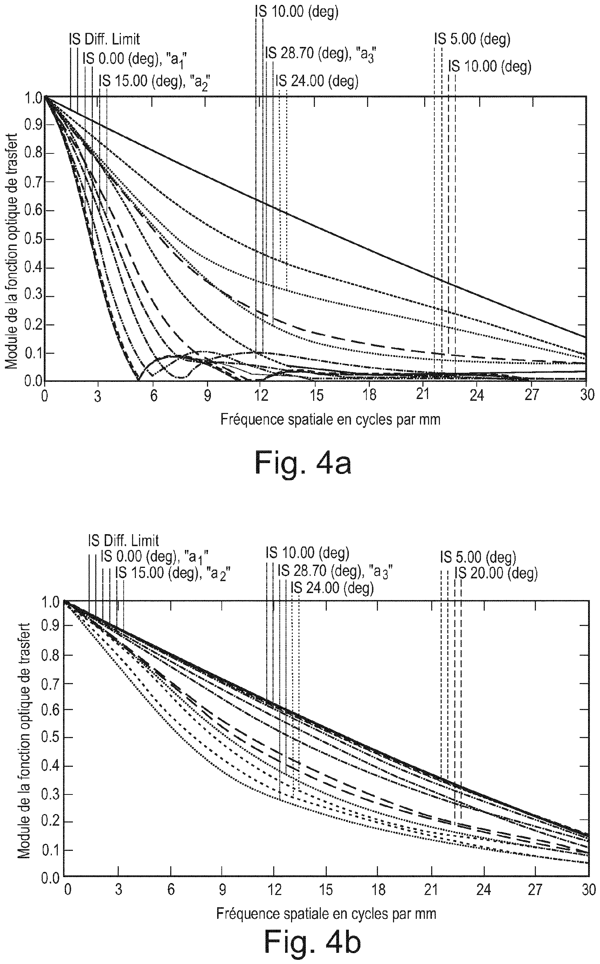

La figure 4a représente un diagramme avec les performances optiques du système optique de la figure 3a dans le cas d'une erreur de positionnement de la lentille froide convergente de +300 micromètres par rapport au détecteur. En particulier, le diagramme de la figure 4a illustre la Fonction de Transfert de Modulation (FTM) polychromatique issue du logiciel classique ZEMAX dans le cas d'une erreur de positionnement de la lentille froide de +300 micromètres par rapport au détecteur.

Comme illustré dans la figure 4a, les différentes courbes sont très éloignées de la ligne droite qui correspond à la limite de diffraction (voir « Diff. Limit » dans la figure 4a) et ainsi la qualité d'image (résolution spatiale) du système d'imagerie est dégradée.

La figure 4b représente un diagramme avec les performances optiques améliorées du système optique de la figure 3a après remplacement de la lentille chaude d'épaisseur 4.17 mm par une autre lentille chaude d'épaisseur 4 mm adaptée pour corriger ladite erreur de positionnement de la lentille froide de +300 micromètres par rapport au détecteur. Il est à noter que l'épaisseur e de 4mm de la lentille chaude remplaçant la lentille chaude d'épaisseur e de 4.17mm respecte bien la condition Rg-Rd (=2 mm) < (1-1/n)e = 2.4 mm (avec n=2.5).

Dans la figure 4b, les différentes courbes sont moins éloignées de la ligne droite qui correspond à la limite de diffraction (voir « Diff. Limit » dans la figure 4b) en comparaison avec les différentes courbes de la figure 4a qui sont très éloignées de la ligne droite. Ainsi, la qualité de l'image (résolution spatiale) après le remplacement de la lentille chaude mentionné ci-dessus est améliorée.

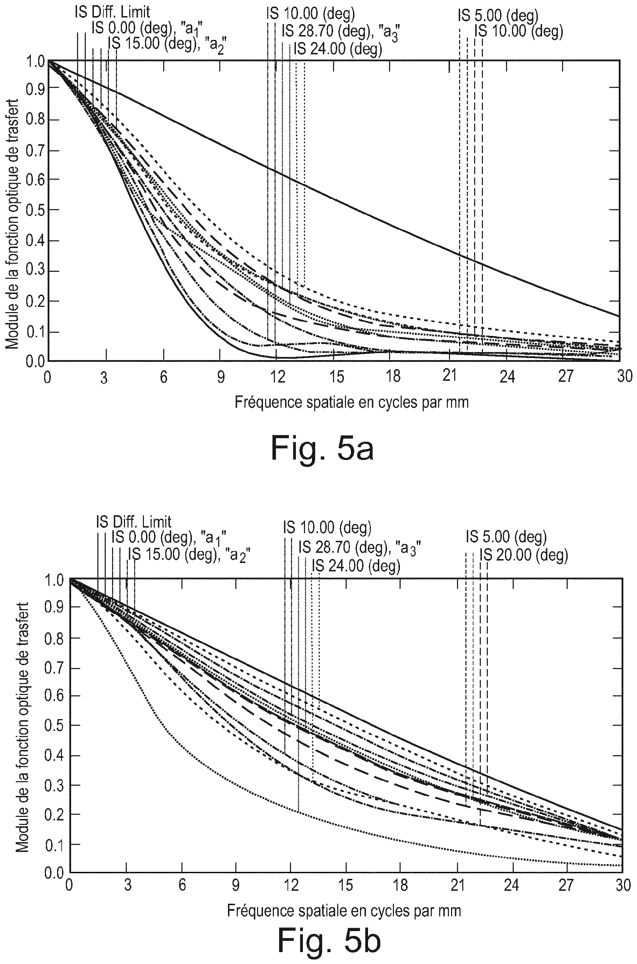

La figure 5a représente un diagramme avec les performances optiques du système optique de la figure 3a dans le cas d'une erreur de positionnement de la lentille froide convergente de - 300 micromètres par rapport au détecteur. En particulier, le diagramme de la figure 5a illustre la Fonction de Transfert de Modulation (FTM) polychromatique issue du logiciel classique ZEMAX dans le cas d'une erreur de positionnement de la lentille froide de -300 micromètres par rapport au détecteur.

Comme illustré dans la figure 5a, les différentes courbes sont très éloignées de la ligne droite qui correspond à la limite de diffraction (voir « Diff. Limit » dans la figure 5a) et ainsi la qualité de l'image (résolution spatiale) du système d'imagerie est dégradée.

La figure 5b représente un diagramme avec les performances optiques améliorées du système optique de la figure 3a après remplacement de la lentille chaude d'épaisseur 4.17 mm par une autre lentille chaude d'épaisseur 4.48mm adaptée pour corriger ladite erreur de positionnement de la lentille froide de -300 micromètres par rapport au détecteur. Il est à noter que l'épaisseur e de 4.48mm de la lentille chaude remplaçant la lentille chaude d'épaisseur e de 4.17mm respecte bien la condition Rg-Rd (=2 mm) < (1-1/n)e ≈ 2.6 mm (avec n=2.5).

Dans la figure 5b, les différentes courbes sont moins éloignées de la ligne droite qui correspond à la limite de diffraction (voir « Diff. Limit » dans la figure 5b) en comparaison avec les différentes courbes de la figure 5a qui sont très éloignées de la ligne droite. Ainsi, la qualité de l'image (résolution spatiale) du système d'imagerie après le remplacement de la lentille chaude mentionné ci-dessus est améliorée.

## Revendications

1. Système d'imagerie grand champ (1) pour le domaine spectral infrarouge comprenant une enceinte à vide (13) ouverte optiquement par un hublot (14) pour le passage des rayons de champ provenant de la scène à imager, une chambre obscure refroidie (3) munie d'un diaphragme froid (5), un détecteur infrarouge (2) placé à l'intérieur de la chambre obscure refroidie (3) et un dispositif de conjugaison optique des rayons de champ avec le détecteur infrarouge (2), le dispositif de conjugaison optique comprenant au moins une lentille froide convergente (4) placée à l'intérieur de ladite chambre obscure refroidie (3) pour focaliser les rayons de champ sur le détecteur infrarouge (2) et au moins une lentille chaude convergente ou divergente (8) placée à l'extérieur de ladite chambre obscure refroidie (3), **caractérisé en ce que** la lentille froide convergente (4) porte l'essentiel de la puissance optique ; le diaphragme froid (5) est le diaphragme du dispositif de conjugaison optique; la lentille chaude (8) forme une image intermédiaire virtuelle située soit en amont de la lentille chaude (8), soit en aval de la lentille froide (4), et la forme de la lentille chaude (8) est telle que la valeur absolue de la différence entre les rayons de courbure (Rg) et (Rd) des deux dioptres de la lentille chaude (8) est inférieure ou égale à e(1-1/n), où e et n sont respectivement l'épaisseur et l'indice optique de la lentille chaude (8).

2. Système selon la revendication 1, dans lequel la lentille chaude (8) est convergente et est placée à une distance de la lentille froide (4) inférieure à la longueur focale de ladite lentille chaude (8) de sorte que l'image intermédiaire virtuelle soit située en aval de la lentille froide, la combinaison de la lentille chaude (8) et de la lentille froide (4) formant une architecture optique du type Petzval.

3. Système selon la revendication 1, dans lequel la lentille chaude (8) est divergente et l'image intermédiaire virtuelle est située en amont de la lentille chaude (8), la combinaison de la lentille chaude (8) et de la lentille froide (4) formant une architecture optique du type rétrofocus.

4. Système selon l'une quelconque des revendications précédentes, dans lequel la lentille froide (4) a un diamètre inférieur à la taille du détecteur.

5. Système selon l'une quelconque des revendications précédentes, dans lequel la lentille chaude (8) est un ménisque.

6. Système selon l'une quelconque des revendications précédentes, dans lequel la lentille froide (4) est un ménisque.

7. Système selon l'une quelconque des revendications 1 à 5, dans lequel la lentille froide (4) a une forme en plan convexe.

8. Système selon la revendication 7, dans lequel la lentille froide (4) plan convexe a une épaisseur inférieur au dixième de son diamètre.

9. Système selon l'une quelconque des revendications 1 à 5, dans lequel la lentille froide (4) est une lentille de Fresnel.

10. Système selon la revendication 9, dans lequel la lentille de Fresnel a un ordre de diffraction supérieure à 5.

11. Système selon l'une quelconque des revendications précédentes, dans lequel un filtre spectral (7) est placé dans l'enceinte à vide (13).

12. Système selon la revendication 11, dans lequel le filtre spectral (7) est placé dans la chambre obscure refroidie (3).

13. Système selon la revendication 12, dans lequel le filtre spectral (7) est placé sur la lentille froide (4).

14. Système selon l'une quelconque des revendications précédentes, dans lequel une lame (9) est placée au niveau du diaphragme froid (5), l'ouverture de la lame (9) dépendant de la bande spectrale utilisée dans le système d'imagerie grand champ (1).

15. Système selon l'une quelconque des revendications précédentes, dans lequel le détecteur (2) est un détecteur bispectral qui est sensible à deux bandes spectrales différentes.

16. Système selon la revendication 1, dans lequel le hublot (14) joue aussi le rôle de ladite lentille chaude (8).

17. Système selon l'une quelconque des revendications précédentes, dans lequel la forme de la lentille chaude (8) est telle que la valeur absolue de la différence entre les rayons de courbure (Rg) et (Rd) des deux dioptres de la lentille chaude (8) est non nulle.

## Patentansprüche

1. Großfeldbildgebungssystem (1) für den Infrarot-Spektralbereich, eine durch eine Luke (14) für den Durchlass von Feldstrahlen von der abzubildenden Szene optisch offene Vakuumkammer (13), eine gekühlte Dunkelkammer (3), die mit einer kalten Blende (5) versehen ist, einen Infrarodetektor (2), der im Inneren der gekühlten Dunkelkammer (3) platziert ist, und eine optische Konjugationsvorrichtung der Feldstrahlen mit dem Infrarodetektor (2) umfasst, wobei die optische Konjugationsvorrichtung mindestens eine kalte Sammellinse (4) umfasst, die im Inneren der gekühlten Dunkelkammer (3) platziert ist, um die Feldstrahlen an dem Infrarodetektor (2) zu fokalisieren, und mindestens eine warme Sammel- oder Streulinse (8), die außerhalb der gekühlten Dunkelkammer (3) platziert ist, dadurch gekenzeichnet, dass die kalte Sammellinse (4) das Wesentliche der optischen Leistung trägt; die kalte Blende (5) die Blende der optischen Konjugationsvorrichtung ist; die warme Linse (8) ein virtuelles Zwischenbild bildet, das sich entweder stromaufwärts der warmen Linse (8), oder stromabwärts der kalten Linse (4) befindet und die Form der warmen Linse (8) dergestalt ist, dass der absolute Wert der Differenz zwischen den Krümmungsradien (Rg) und (Rd) der beiden Dioptrien der warmen Linse (8) kleiner oder gleich e(1-1/n) ist, wobei e und n jeweils die Stärke und der optische Index der warmen Linse (8) sind.

2. System nach Anspruch 1, wobei die warme Linse (8) eine Sammellinse ist und in einem Abstand von der kalten Linse (4) platziert ist, der kleiner als die Brennweite der warmen Linse (8) ist, sodass sich das virtuelle Zwischenbild stromabwärts der kalten Linse befindet, wobei die Kombination der warmen Linse (8) und der kalten Linse (4) eine optische Architektur des Typs Petzval bildet.

3. System nach Anspruch 1, wobei die warme Linse (8) eine Streulinse ist und sich das virtuelle Zwischenbild stromaufwärts der warmen Linse (8) befindet, wobei die Kombination der warmen Linse (8) und der kalten Linse (4) eine optische Architektur des Typs Retrofokus bildet.

4. System nach einem der vorstehenden Ansprüche, wobei die kalte Linse (4) einen Durchmesser kleiner als die Größe des Detektors aufweist.

5. System nach einem der vorstehenden Ansprüche, wobei die warme Linse (8) ein Meniskus ist.

6. System nach einem der vorstehenden Ansprüche, wobei die kalte Linse (4) ein Meniskus ist.

7. System nach einem der Ansprüche 1 bis 5, wobei die kalte Linse (4) eine plankonvexe Form aufweist.

8. System nach Anspruch 7, wobei die plankonvexe kalte Linse (4) eine Stärke kleiner dem Zehntel ihres Durchmessers aufweist.

9. System nach einem der Ansprüche 1 bis 5, wobei die kalte Linse (4) eine Fresnellinse ist.

10. System nach Anspruch 9, wobei die Fresnellinse eine Beugungsordnung größer als 5 aufweist.

11. System nach einem der vorstehenden Ansprüche, wobei ein Spektralfilter (7) in der Vakuumkammer (13) platziert wird.

12. System nach Anspruch 11, wobei der Spektralfilter (7) in der gekühlten Dunkelkammer (3) platziert wird.

13. System nach Anspruch 12, wobei der Spektralfilter (7) auf der kalten Linse (4) platziert wird.

14. System nach einem der vorstehenden Ansprüche, wobei eine Platte (9) im Bereich der kalten Blende (5) platziert wird, wobei die Öffnung der Platte (9) von dem in dem Großfeldbildgebungssystem (1) verwendeten Spektralband abhängig ist.

15. System nach einem der vorstehenden Ansprüche, wobei der Detektor (2) ein bispektraler Detektor ist, der für zwei unterschiedliche Spektralbänder empfindlich ist.

16. System nach Anspruch 1, wobei die Luke (14) auch die Aufgabe der warmen Linse (8) übernimmt.

17. System nach einem der vorstehenden Ansprüche, wobei die Form der warmen Linse (8) dergestalt ist, dass der absolute Wert der Differenz zwischen den Krümmungsradien (Rg) und (Rd) der beiden Dioptrien der warmen Linse (8) ungleich Null ist.

## Claims

1. Wide-field imaging system (1) for the infrared spectral range comprising a vacuum chamber (13) optically open via a porthole (14) for the passage of field rays coming from the scene to be imaged, a cooled dark chamber (3) provided with a cold diaphragm (5), an infrared detector (2) placed inside the cooled dark chamber (3) and an optical conjugation device of the field rays with the infrared detector (2), the optical conjugation device comprising at least one cold converging lens (4) placed inside said cooled dark chamber (3) in order to focus the field rays on the infrared detector (2) and at least one warm converging or diverging lens (8) placed outside said cooled dark chamber (3), **characterised in that** the cold converging lens (4) carries most of the optical power; the cold diaphragm (5) is the diaphragm of the optical conjugation device; the warm lens (8) forms a virtual intermediate image located either upstream of the warm lens (8), or downstream of the cold lens (4), and the shape of the warm lens (8) is such that the absolute value of the difference between the radii of curvature (Rg) and (Rd) of the two refractive surfaces of the warm lens (8) is less than or equal to e(1-1/n), where e and n are respectively the thickness and the optical index of the warm lens (8).

2. System according to claim 1, wherein the warm lens (8) is converging and is placed at a distance from the cold lens (4) less than the focal length of said warm lens (8) in such a way that the virtual intermediate image is located downstream of the cold lens, the combination of the warm lens (8) and of the cold lens (4) forming an optical architecture of the Petzval type.

3. System according to claim 1, wherein the warm lens (8) is diverging and the virtual intermediate image is located upstream of the warm lens (8), the combination of the warm lens (8) and of the cold lens (4) forming an optical architecture of the retrofocus type.

4. System according to any preceding claim, wherein the cold lens (4) has a diameter less than the size of the detector.

5. System according to any preceding claim, wherein the warm lens (8) is a meniscus.

6. System according to any preceding claim, wherein the cold lens (4) is a meniscus.

7. System according to any of claims 1 to 5, wherein the cold lens (4) has the shape of a convex plane.

8. System according to claim 7, wherein the convex plane cold lens (4) has a thickness less than one-tenth of its diameter.

9. System according to any of claims 1 to 5, wherein the cold lens (4) is a Fresnel lens.

10. System according to claim 9, wherein the Fresnel lens has a diffraction order greater than 5.

11. System according to any preceding claim, wherein a spectral filter (7) is placed in the vacuum chamber (13).

12. System according to claim 11, wherein the spectral filter (7) is placed in the cooled dark chamber (3) .

13. System according to claim 12, wherein the spectral filter (7) is placed on the cold lens (4).

14. System according to any preceding claim, wherein a blade (9) is placed at the level of the cold diaphragm (5), the opening of the blade (9) depending on the spectral band used in the wide-field imaging system (1) .

15. System according to any preceding claim, wherein the detector (2) is a bispectral detector that is sensitive to two different spectral bands.

16. System according to claim 1, wherein the porthole (14) also plays the role of said warm lens (8).

17. System according to any preceding claim, wherein the shape of the warm lens (8) is such that the absolute value of the difference between the radii of curvature (Rg) and (Rd) of the two refractive surfaces of the warm lens (8) is non-zero.
